# EUROPÄISCHE PATENTANMELDUNG

(11) **EP 4 841 664 A1**
(43) Veröffentlichungstag der Anmeldung: **18.11.2026**
(21) Anmeldenummer: 25177045.9
(22) Anmeldetag: 16.05.2025
(51) Int. Cl.: H01H 9/20, H01H 9/10, H01H 9/22, H01H 21/06, B60L 1/00, B60L 3/04, H01H 3/06, H01H 3/04

(54) **SCHALTEINRICHTUNG FÜR EINEN ZUG**

(71) Anmelder: HOPPECKE Systemtechnik GmbH, 08056 Zwickau (DE)
(72) Erfinder: GEHRING, Tobias, 08209 Auerbach (DE); REINHOLD, Stefan, 95182 Döhlau (DE); TRAPP, Magnus, Bad Wünnenberg (DE)
(74) Vertreter: Brinkmann & Partner

(57) **Zusammenfassung**

Die Erfindung betrifft eine Schalteinrichtung für einen Zug zur Anordnung in einem Strompfad zwischen einem zugeigenen Batteriemodul und einem Bordnetz des Zuges, mit einem batteriemodulseitigen Stromeingang (15), einem bordnetzseitigen Stromausgang (17), einem Sicherungshalter (13), der eine den Stromausgang (16) absichernde Sicherung aufnimmt, und einem zwischen Stromeingang (15) und Stromausgang (16) angeordneten Schaltkontakt (23), sowie ferner mit einem zur Betätigung des Schaltkontakts (23) vorgesehenen Bedienelement (19), einem mit dem Bedienelement (19) zusammenwirkenden Verriegelungselement (32), einem zwei mögliche Endlagen einnehmenden ersten Sicherungselement (17) und einem zwei mögliche Endlagen einnehmenden zweiten Sicherungselement (18), wobei das erste Sicherungselement (17) dazu eingerichtet ist, bei geschlossenem Schaltkontakt (23) eine Überführung des Verriegelungselements (32) in eine das Bedienelement (19) freigebende Stellung zu sperren und wobei das zweite Sicherungselement (18) dazu eingerichtet ist, bei geöffnetem Schaltkontakt (23) eine Überführung des Verriegelungselements (32) in eine das Bedienelement (19) sperrende Stellung zu bewirken.

## Beschreibung

Die Erfindung betrifft eine Schalteinrichtung für einen Zug zur Anordnung in einem Strompfad zwischen einem zugeigenen Batteriemodul und einem Bordnetz des Zuges. Ferner betrifft die Erfindung ein Verfahren zur elektrischen Trennung eines Strompfades zwischen einem Batteriemodul und einem Bordnetz eines Zuges mittels einer im Strompfad angeordneten Schalteinrichtung.

Schalteinrichtungen der eingangs genannten Art im Allgemeinen sowie solche für Züge im Speziellen sind aus dem Stand der Technik an sich gut bekannt, weshalb es eines gesonderten druckschriftlichen Nachweises an dieser Stelle nicht bedarf.

Nach dem Stand der Technik ist zur Spannungsversorgung eines Bordnetzes eines Zuges ein zugeigenes Batteriemodul vorgesehen. Dabei stehen das Batteriemodul und das Bordnetz über einen Strompfad in elektrischer Wirkverbindung.

Das Batteriemodul ist typischerweise als Lithium-Ionen-Batteriemodul ausgebildet und verfügt über eine Mehrzahl von elektrisch miteinander verschalteten Lithium-Ionen-Zellen. Das Bordnetz des Zuges verfügt ebenfalls über eine Mehrzahl von Einzelkomponenten, typischerweise über ein Batteriemanagementsystem und wenigstens einen Verbraucher. Zusammen bilden das Batteriemodul und das damit in elektrischer Wirkverbindung stehende Bordnetz ein Bordspannungssystem.

Nach dem Stand der Technik verfügt ein Zug typischerweise über zwei Bordspannungssysteme. Ein erstes Spannungssystem dient insbesondere der Versorgung von zugseitigen Computersystemen und/oder einer Zugsteuerung. Ein zweites Spannungssystem versorgt alle übrigen Systeme des Zuges und ermöglicht eine Fortbewegung des Zuges auch ohne eine externe Stromversorgung, beispielsweise auf nicht elektrifizierten Strecken oder im Notfall.

Nach dem Stand der Technik sind zur Spannungsversorgung der beiden Bordspannungssysteme zwei voneinander getrennte Batteriemodule vorgesehen, d.h. ein erstes Batteriemodul für das erste Bordspannungssystem und ein zweites Batteriemodul für das zweite Bordspannungssystem.

In den Strompfad zwischen einem Batteriemodul und dem zugehörigen Bordnetz des Zuges ist eine Schalteinrichtung angeordnet. Diese Schalteinrichtung dient dazu, im Bedarfsfall die elektrische Wirkverbindung zwischen dem Batteriemodul und dem zugehörigen Bordnetz trennen zu können. Nach dem Stand der Technik kommen als derartige Schalteinrichtungen typischerweise Trennschalter zum Einsatz.

Vorbekannte Trennschalter dienen insbesondere dazu, das Batteriemodul vom zugehörigen Bordnetz elektrisch trennen zu können, was es einem Anwender gefahrlos gestattet, Wartungsarbeiten vornehmen zu können, sei es am Batteriemodul oder am Batteriemanagementsystem. Ferner ist bei getrenntem Strompfad zwischen Batteriemodul und Bordnetz ein Sicherungswechsel gefahrlos gestattet.

Obgleich sich vorbekannte Trennschalter im alltäglichen Praxiseinsatz bewährt haben, besteht Verbesserungsbedarf. So ist es insbesondere gewünscht, ein unbeabsichtigtes Schalten eines Trennschalters sicher ausschließen zu können. Vor diesem Hintergrund ist es die der Erfindung zugrundeliegende **Aufgabe,** eine Schalteinrichtung konstruktiv dahingehend weiterzuentwickeln, dass bei gleichzeitig einfacher Bedienmöglichkeit eine sichere Handhabung gewährleistet ist.

Zur **Lösung** dieser Aufgabe wird vorrichtungsseitig vorgeschlagen eine Schalteinrichtung für einen Zug zur Anordnung in einem Strompfad zwischen einem zugeigenen Batteriemodul und einem Bordnetz des Zuges, mit einem batteriemodulseitigen Stromeingang, einem bordnetzseitigen Stromausgang, einem Sicherungshalter, der eine den Stromausgang absichernde Sicherung aufnimmt, und einem zwischen Stromeingang und Stromausgang angeordneten Schaltkontakt, sowie ferner mit einem zur Betätigung des Schaltkontakts vorgesehenen Bedienelement, einem mit dem Bedienelement zusammenwirkenden Verriegelungselement, einem zwei mögliche Endlagen einnehmenden ersten Sicherungselement und einem zwei mögliche Endlagen einnehmenden zweiten Sicherungselement, wobei das erste Sicherungselement dazu einrichtet ist, bei geschlossenem Schaltkontakt eine Überführung des Verriegelungselements in eine das Bedienelement freigebende Stellung zu sperren und wobei das zweite Sicherungselement dazu eingerichtet ist, bei geöffnetem Schaltkontakt eine Überführung des Verriegelungselements in eine das Bedienelement sperrende Stellung zu bewirken.

Ferner wird zur **Lösung** der vorstehenden Aufgabe verfahrensseitig vorgeschlagen ein Verfahren zur elektrischen Trennung eines Strompfades zwischen einem Batteriemodul und einem Bordnetz eines Zuges mittels einer im Strompfad angeordneten Schalteinrichtung, bei dem ein erstes Sicherungselement betätigt und ein damit zusammenwirkendes Verriegelungselement in eine Stellung überführt wird, in der ein mit einem Schaltkontakt der Schalteinrichtung in Wirkverbindung stehendes Bedienelement freigegeben ist, bei dem das Bedienelement betätigt und der Schaltkontakt zur elektrischen Trennung des Strompfads in eine geöffnete Stellung überführt wird und bei dem ein zweites Sicherungselement und ein damit zusammenwirkendes Verriegelungselement in eine Stellung überführt wird, in der bei geöffnetem Schaltkontakt eine Rücküberführung des Bedienelements gesperrt ist.

Die erfindungsgemäße Schalteinrichtung verfügt über einen batteriemodulseitigen Stromeingang einerseits und einen bordnetzseitigen Stromausgang andererseits. Im endmontierten Zustand ist die Schalteinrichtung im Strompfad zwischen Batteriemodul und Bordnetz angeordnet, wobei das Batteriemodul elektrisch mit der Schalteinrichtung über den dafür vorgesehenen Stromeingang gekoppelt ist, und das Bordnetz ist elektrisch an den Stromausgang der Schalteinrichtung angeschlossen. Bei dem Bordnetz kann es sich vorzugsweise um das Traktionsnetz des Zuges handeln, in welchem Fall das damit in Wirkverbindung stehende Batteriemodul ein zur Traktion geeignetes Hochvoltbatteriemodul ist.

Die Schalteinrichtung verfügt ferner über einen Sicherungshalter, der dazu dient, zumindest eine Sicherung aufzunehmen. Diese Sicherung dient der Absicherung des Stromausgangs. Im bestimmungsgemäßen Verwendungsfall sind im Sicherungshalter der Schalteinrichtung eine Mehrzahl von Sicherungen angeordnet.

Die Schalteinrichtung verfügt ferner über einen Schaltkontakt. Dieser ist zwischen Stromeingang und Stromausgang angeordnet. Dieser Schaltkontakt kann entweder geöffnet oder geschlossen sein. Befindet sich der Schaltkontakt in geöffnetem Zustand, so ist der Strompfad elektrisch getrennt, wohingegen der Strompfad elektrisch nicht unterbrochen ist, wenn sich der Schaltkontakt in geschlossenem Zustand befindet. Da der Schaltkontakt elektrisch zwischen dem Stromeingang und dem Stromausgang angeordnet ist, kann mittels der Schalteinrichtung je nach Stellung des Schaltkontakts der Strompfad geöffnet oder geschlossen werden. Nur bei geschlossenem Schaltkontakt kann unter Zwischenordnung der Schalteinrichtung eine Spannungsversorgung des Bordnetzes durch das daran elektrisch angeschlossene Batteriemodul stattfinden.

Für eine Betätigung des Schaltkontakts verfügt die Schalteinrichtung ferner über ein Bedienelement. Dieses Bedienelement ist manuell durch einen Verwender betätigbar, was es einem Verwender gestattet, den Schaltkontakt wahlweise schalten, d.h. aus der geöffneten Stellung in eine geschlossene Stellung oder umgekehrt überführen zu können.

Die Schalteinrichtung verfügt des Weiteren über zwei Sicherungselemente, ein erstes Sicherungselement und ein zweites Sicherungselement. Beide Sicherungselemente können jeweils in zwei mögliche Endlagen gebracht werden. Dabei ist jeweils ein verwenderseitiges Überführen eines Sicherungselements aus der einen möglichen Endlage in die andere mögliche Endlage und umgekehrt gestattet.

Das erste Sicherungselement ist erfindungsgemäß dazu eingerichtet, bei geschlossenem Schaltkontakt eine Überführung des Verriegelungselements in eine das Bedienelement freigebende Stellung zu sperren. In einer ersten Stellung des Verriegelungselements ist das Bedienelement verwenderseitig nicht betätigbar. Es ist durch das Verriegelungselement positionsgesichert, so dass es nicht frei bewegt werden kann. Das Sicherungselement dient in einer ersten Endlage dazu, das Verriegelungselement in dieser das Bedienelement nicht freigebenden Stellung zu sperren, d.h. ohne vorherige Betätigung des zugehörigen Sicherungselements kann das Verriegelungselement zur Freigabe des Bedienelements nicht bewegt werden. Diese Stellung von Verriegelungselement und Sicherungselement ist bei geschlossenem Schaltkontakt gegeben. Diese Stellung ist typischerweise die sogenannte Normalstellung, in der der Strompfad geschlossen ist, das Bordnetz des Zuges also mit Spannung aus dem daran elektrisch angeschlossenen Batteriemodul versorgt wird. In dieser Normalstellung ist eine Trennung des Strompfads durch eine manuelle Betätigung des mit dem Schaltkontakt zusammenwirkenden Bedienelements nicht möglich, weil das Bedienelement durch das Verriegelungselement gesperrt ist. Eine Freigabe des Bedienelements durch eine Betätigung des Verriegelungselements ist indes nicht ohne weiteres möglich, da das Verriegelungselement durch das Sicherungselement gesperrt ist. Es bedarf mithin erst einer Betätigung des Sicherungselements, so dass alsdann das Verriegelungselement betätigt werden kann, was zu einer Freigabe des Bedienelements führt. Erst wenn das Bedienelement freigegeben ist, kann durch eine verwenderseitige manuelle Betätigung des Bedienelements die elektrische Wirkverbindung zwischen Batteriemodul und Bordnetz durch eine Betätigung des mit dem Bedienelement zusammenwirkenden Schaltkontakts aufgehoben werden.

Diese konstruktive Ausgestaltung stellt sicher, dass es nicht zu einer ungewollten Trennung der elektrischen Verbindung zwischen Batteriemodul und Bordnetz kommen kann. Dabei ist gleichzeitig eine einfache Bedienmöglichkeit geschaffen, wobei es verwenderseitig lediglich darauf zu achten gilt, die richtige Bedienreihenfolge von Sicherungselement, Verriegelungselement und Bedienelement einzuhalten. Auf diese Weise ist aber zugleich auch eine Fehlbedienung ausgeschlossen, was ebenfalls zu einer insgesamt sicheren Handhabung beiträgt.

Erfindungsgemäß ist des Weiteren vorgesehen, dass das zweite Sicherungselement dazu eingerichtet ist, bei geöffnetem Schaltkontakt eine Überführung des Verriegelungselements in eine das Bedienelement sperrende Stellung zu bewirken.

Ist der Schaltkontakt durch eine vorherige Bedienung des Bedienelements in geöffnetem Zustand, so ist das Bordnetz des Zuges stromlos gestellt, weil der Strompfad zwischen Batteriemodul und Bordnetz elektrisch unterbrochen ist. In dieser Stellung des Schaltkontakts können von einem Verwender gefahrlos Wartungsarbeiten insbesondere am Batteriemanagementsystem vorgenommen werden, vom Sicherungshalter der Schalteinrichtung beherbergte Sicherungen getauscht werden und/oder sonstige Reparaturarbeiten am Batteriemodul und/oder Bordnetz vorgenommen werden. Um sicherzustellen, dass es nicht zu einer ungewollten Bedienung des Bedienelements mit der Folge kommt, dass der Schaltkontakt aus der geöffneten Stellung in eine geschlossene Stellung überführt wird, ist das Verriegelungselement in eine das Bedienelement sperrende Stellung zu überführen. In dieser sperrenden Stellung kann das Bedienelement nicht in seine den Schaltkontakt schließende Stellung rücküberführt werden, weil es durch das Verriegelungselement hieran gehindert ist. Eine Überführung des Verriegelungselements in diese das Bedienelement sperrende Stellung ist aber nur bei vorher betätigtem zweiten Sicherungselement möglich. Nur wenn dieses zuerst aus einer ersten in seine zweite Endlage überführt ist, ist eine Überführung des Verriegelungselements in eine andere Stellung möglich. Sobald also das Bedienelement bei geöffnetem Schaltkontakt durch das Verriegelungselement in seiner Bedienmöglichkeit gesperrt ist, wird durch das zweite Sicherungselement eine zusätzliche Absicherung dadurch bereitgestellt, dass eine Freigabe des Bedienelements durch Verfahren des Verriegelungselements nicht ohne vorherige Betätigung des zweiten Sicherungselements möglich ist. Auch hierdurch wird in vorteilhafter Weise bei gleichzeitig einfacher Bedienmöglichkeit eine sichere Handhabung gewährleistet. Insbesondere ist es sichergestellt, dass während Wartungs- oder Reparaturarbeiten und/oder einem Sicherungstausch nicht eine ungewollte elektrische Verbindung zwischen Batteriemodul und Bordnetz hergestellt werden kann. Es bedarf vielmehr einer vorherigen Betätigung des zweiten Sicherungselements gefolgt von einer Betätigung des Verriegelungselements, bevor das Bedienelement freigegeben und zur Überführung des Schaltkontakts in die geschlossene Stellung betätigt werden kann.

Die erfindungsgemäße Schalteinrichtung kombiniert in vorteilhafter Weise in nur einem Gerät einen Sicherungshalter zur Aufnahme von Sicherungen und einen Schaltkontakt. Dies ermöglicht eine Vorkonfiguration, so dass es am Einbauort vor Ort nur noch erforderlich ist, einen elektrischen Anschluss an den Strompfad mittels des dafür einrichtungsseitig vorgesehenen Stromeingangs einerseits und der Stromausgangs andererseits vorzunehmen. Die erfindungsgemäße Schalteinrichtung stellt ferner konstruktiv ein Sicherungskonzept bereit, das eine Fehlbedienung dem Grunde nach, jedenfalls unbeabsichtigte Fehlbedienungen ausschließt. Dabei ist die konstruktive Umsetzung des Sicherheitskonzepts integraler Bestandteil der erfindungsgemäßen Schalteinrichtung, was eine einfache Montage bzw. Demontage ermöglicht und gleichzeitig gewährleistet, dass im bestimmungsgemäßen Betriebsfall eine sichere Handhabung gegeben ist.

Verfahrensseitig ist zur elektrischen Trennung eines Strompfads zwischen einem Batteriemodul und einem Bordnetz eines Zuges mittels einer im Strompfad angeordneten Schalteinrichtung vorgesehen, dass zunächst ein erstes Sicherungselement betätigt wird. Alsdann kann ein damit zusammenwirkendes Verriegelungselement in eine Stellung überführt werden, in der ein mit einem Schaltkontakt der Schalteinrichtung in Wirkverbindung stehendes Bedienelement freigegeben ist. Erst also dann, wenn das erste Sicherungselement in die dafür vorgesehene Stellung überführt ist, kann eine Bedienung des Verriegelungselements mit der Folge stattfinden, dass das Bedienelement freigegeben ist. Nur wenn das Bedienelement freigegeben ist, kann eine verwenderseitige Betätigung desselben stattfinden, was dann zu einer Betätigung des damit zusammenwirkenden Schaltkontakts der Schalteinrichtung führt.

Bei geöffnetem Schaltkontakt, d.h. bei einem zuvor bestimmungsgemäß betätigten Bedienelement ist dann in einem letzten Verfahrensschritt ein zweites Sicherungselement zu bedienen, so dass ein damit zusammenwirkendes Verriegelungselement in eine Stellung überführt wird, in der eine Rücküberführung des Bedienelements gesperrt ist, d.h. das Bedienelement nicht ungewollt mit der Folge einer Schaltkontaktbetätigung in seine ursprüngliche Ausgangsstellung rücküberführt werden kann. Die Betätigung des zweiten Sicherungselements dient mithin dazu, das Bedienelement in der geöffneten Stellung des Schaltkontakts mittels des dafür vorgesehenen Verriegelungselements zu verriegeln, so dass eine Überführung des Schaltkontakts in die geschlossene Stellung mittels des Bedienelements nicht ermöglicht ist.

Die vorbeschriebene Verfahrensdurchführung nach der Erfindung erbringt die schon anhand der erfindungsgemäßen Schalteinrichtung erläuterten Vorteile. Es ist insbesondere bei einer gleichzeitig sicheren Handhabung eine vereinfachte Bedienmöglichkeit gegeben.

Gemäß einem weiteren Merkmal der Erfindung ist vorgesehen, dass die Schalteinrichtung über ein Gehäuse verfügt, das einen Grundkörper und eine daran mittels entsprechender Befestigungsmittel lösbar angeordnete Abdeckung aufweist. Das Gehäuse der Schalteinrichtung nimmt die vorbeschriebenen Baukomponenten der Schalteinrichtung auf. Es ist so eine insgesamt handliche und deshalb auch einfach zu montierende bzw. demontierende Baueinheit geschaffen. Dabei stellt das Gehäuse einen Grundkörper einerseits und eine Abdeckung andererseits bereit. Der Grundkörper verfügt zur Aufnahme der Baukomponenten der erfindungsgemäßen Schalteinrichtung über einen entsprechenden Volumenraum. Zur Bestückung des Volumenraums verfügt der Grundkörper über eine offene Seite. Diese offene Seite ist im endmontierten Zustand mittels einer lösbar am Grundkörper angeordneten Abdeckung verschlossen. Dabei dienen zur lösbaren Anordnung der Abdeckung am Grundkörper entsprechende Befestigungsmittel, bei denen es sich beispielsweise um Schrauben handeln kann.

Für einen Zugriff auf den vom Grundkörper bereitgestellten Volumenraum ist die Abdeckung des Grundkörpers zu entfernen. Zu diesem Zweck hat zuvor ein Lösen der dafür vorgesehenen Befestigungsmittel stattzufinden. Es ist dabei besonders bevorzugt, dass der Sicherungshalter samt den davon aufgenommenen Sicherungen von der Abdeckung abgedeckt ist. Bei entfernter Abdeckung ist mithin ein verwenderseitiger Zugriff auf den Sicherungshalter und auf die davon beherbergten Sicherungen ermöglicht. Dies gestattet einen einfachen Sicherungstausch dadurch, dass lediglich die Abdeckung vom Grundkörper zu entfernen, ein Sicherungstausch vorzunehmen und alsdann die Abdeckung am Grundkörper wieder zu befestigen ist.

Gemäß einem weiteren Merkmal der Erfindung ist vorgesehen, dass die freie Zugänglichkeit der Befestigungsmittel bei geschlossenem Schaltkontakt durch das Bedienelement gesperrt ist. Es wird hierdurch eine zusätzliche Sicherheitsmaßnahme bereitgestellt. Denn so lange sich das Bedienelement noch in der sogenannten Normalstellung befindet, in der der Schaltkontakt geschlossen ist, ist durch das Bedienelement selbst ein Zugriff auf die Befestigungsmittel nicht möglich. Konstruktiv ist damit sichergestellt, dass die zur Anordnung der Abdeckung am Grundkörper vorgesehenen Befestigungsmittel nicht erreicht werden können, wenn sich das Bedienelement in Normalstellung befindet. Insbesondere in Sicherungstausch ist mithin in Normalstellung des Bedienelements sicher ausgeschlossen.

Gemäß einem weiteren Merkmal der Erfindung wird in diesem Zusammenhang vorgeschlagen, dass die Befestigungsmittel bei geschlossenem Schaltkontakt durch das Bedienelement verdeckt sind. Die Sperrung der freien Zugänglichkeit der Befestigungsmittel durch das Bedienelement ist vorzugsweise mithin dadurch erreicht, dass das Bedienelement die Befestigungselemente bei geschlossenem Schaltkontakt verdeckt. Die Zugänglichkeit der Befestigungsmittel ist mithin dadurch gesperrt, als dass das Bedienelement selbst eine Zugänglichkeit zu den Befestigungsmittel verwehrt. Es ist so bei gleichzeitig einfacher Konstruktion eine gesteigerte Betriebssicherheit gegeben.

Gemäß einem weiteren Merkmal der Erfindung ist vorgesehen, dass das Bedienelement ein am Grundkörper des Gehäuses verschwenkbar angeordneter Hebel ist. Dieser Hebel kann im bestimmungsgemäßen Verwendungsfall von einem Verwender in einfacher Weise ergriffen und aus einer ersten Stellung in eine zweite Stellung überführt werden und umgekehrt. In der ersten Stellung ist beispielsweise die Normalstellung gegeben, in welcher der Schaltkontakt geschlossen ist. In der zweiten Stellung befindet sich der Hebel in der Trennstellung, in welcher der Schaltkontakt geöffnet ist, so dass die elektrische Verbindung zwischen dem Batteriemodul und dem Bordnetz getrennt ist.

Gemäß einem weiteren Merkmal der Erfindung ist vorgesehen, dass der Hebel einen ersten Schwenkarm, einen zweiten Schwenkarm und eine zwischen den beiden Schwenkarmen angeordnete Hebelhandhabe aufweist. Es ist so konstruktiv eine robuste Ausgestaltung des Hebels gegeben. Es sind insbesondere zwei Schwenkarme vorgesehen, die eine präzise und doppelt geführte Bewegung der mit den Schwenkarmen gekoppelten Hebelhandhabe ermöglichen. Dabei erstreckt sich die Hebelhandhabe stangenartig zwischen den beiden Schwenkarmen, was eine sichere Abdeckung der die Abdeckung mit dem Grundkörper lösbar verbindenden Befestigungsmittel in Normalstellung des Hebels sicherstellt.

Gemäß einem weiteren Merkmal der Erfindung ist vorgesehen, dass das Bedienelement unter Zwischenordnung eines Getriebes mit dem Schaltkontakt zusammenwirkt. Das in Wirkverbindung mit dem Schaltkontakt stehende Bedienelement wirkt also nicht direkt auf den Schaltkontakt ein, sondern unter Zwischenordnung eines Getriebes indirekt. Es ist so eine gezielte Krafteinleitung in den Schaltkontakt zwecks Schaltung desselben ermöglicht, und dies bei einem gleichzeitig kompakten Gesamtaufbau der erfindungsgemäßen Schalteinrichtung.

Gemäß einem weiteren Merkmal der Erfindung ist in diesem Zusammenhang vorgesehen, dass das Getriebe ein bedienelementseitiges Kraftübertragungsmittel und ein damit zusammenwirkendes Gegenstück aufweist, wobei das Gegenstück beweglich vom Gehäuse aufgenommen ist und eine Schaltkontaktkomponente des Schaltkontakts trägt.

Der nach der Erfindung vorgesehene Schaltkontakt verfügt über zwei Schaltkontaktkomponenten. Stehen diese in elektrischer Wirkverbindung, so ist der Schaltkontakt geschlossen. Andernfalls ist der Schaltkontakt geöffnet.

Einer der beiden Schaltkontaktkomponenten wird von einem mit einem Kraftübertragungsmittel in Wirkverbindung stehenden Gegenstück getragen. Wenn also das Gegenstück unter Krafteinwirkung des Kraftübertragungsmittels bewegt wird, so führt dies zu einer relativen Verfahrbewegung der beiden Schaltkontaktkomponenten zueinander mit der Folge, dass der Schaltkontakt geöffnet wird. Dabei kann das Gegenstück vorzugsweise federbelastet ausgebildet und deshalb bestrebt sein, sich in die Normalstellung zurückzubewegen, in der die beiden Schaltkontaktkomponenten elektrisch in Wirkverbindung stehen, der Schaltkontakt mithin geschlossen ist.

Das Kraftübertragungsmittel ist bedienelementseitig ausgebildet. Es bewegt sich mithin infolge einer Kraftbeaufschlagung des Bedienelements durch einen Verwender. Die so bereitgestellte Kraft wird mittels des Kraftübertragungsmittels auf das Gegenstück übertragen, das sich alsdann bewegt, infolge dessen es zu einer Trennung der beiden Schaltkontaktkomponenten kommt. Im Ergebnis ist so eine robuste, gleichzeitig aber präzise schaltende Anordnung gegeben.

Gemäß einem weiteren Merkmal der Erfindung ist in diesem Zusammenhang vorgesehen, dass das Gegenstück von einer Kulisse verfahrbar aufgenommen ist. Das Gegenstück bewegt sich infolge einer Kraftbeaufschlagung mithin durch Verfahren, wobei die Verfahrbewegung des Gegenstücks mittels einer Kulisse geführt ist. Das Gegenstück beschreibt mithin im bestimmungsgemäßen Verwendungsfall eine vorgegebene Bewegungsbahn anhand der durch die Kulisse vorgegebene Führung. Auch dies unterstützt eine präzise und robuste Schaltkontaktausgestaltung.

Gemäß einem weiteren Merkmal der Erfindung ist vorgesehen, dass das Verriegelungselement zweiteilig ausgebildet ist und einen ersten verfahrbaren Verriegelungsschieber sowie einen zweiten verfahrbaren Verriegelungsschieber aufweist. Die beiden Verriegelungsschieber dienen dabei dazu, eine Betätigung des Bedienelements freizugeben oder zu sperren, je nach Stellung. Dabei sind die beiden Verriegelungsschieber unabhängig voneinander bedienbar, so dass das Bedienelement in geschlossener Stellung des Schaltkontakt mittels des einen Verriegelungsschiebers entweder freigegeben oder in seiner Bewegung gesperrt werden kann und bei geöffnetem Schaltkontakt mittels des anderen Verriegelungsschiebers ebenfalls in seiner Stellung gesperrt oder für eine Bewegung freigegeben werden kann.

Gemäß einem weiteren Merkmal der Erfindung ist vorgesehen, dass der erste Verriegelungsschieber mit dem ersten Sicherungselement und dem ersten Schwenkarm zusammenwirkt und der zweite Verriegelungsschieber mit dem zweiten Sicherungselement und dem zweiten Schwenkarm zusammenwirkt.

Der erste Verriegelungsschieber wirkt mit dem ersten Schwenkarm des Hebels zusammen. Je nach Stellung des Verriegelungsschiebers ist der Schwenkarm in seiner Bewegung entweder blockiert oder nicht, und damit auch der als Bedienelement dienende Hebel als solcher. Ob eine Verfahrbewegung des Verriegelungsschiebers ermöglicht ist, ergibt sich aus der Stellung des ersten Sicherungselements. Ist der Verriegelungsschieber mittels des Sicherungselements freigegeben, so kann der Verriegelungsschieber entsprechend verfahren werden und das Bedienelement freigeben oder nicht. Andernfalls ist der Verriegelungsschieber mittels des ersten Sicherungselements gesperrt, so dass keine freie Bewegungsmöglichkeit des Verriegelungsschiebers gegeben ist. Entsprechendes gilt mit Bezug auf den zweiten Verriegelungsschieber, der mit dem zweiten Sicherungselement und dem zweiten Schwenkarm zusammenwirkt.

Gemäß einem weiteren Merkmal der Erfindung ist vorgesehen, dass die Sicherungselemente schlüsselbetätigbare Schließzylinder sind. Die Betätigung eines Sicherungselements setzt mithin voraus, dass zur Betätigung des Schließzylinders verwenderseitig der richtige Schlüssel zur Verfügung steht. Auch hierdurch ist eine zusätzliche Sicherungsmaßnahme gegeben, da nicht autorisierte Personen eine Betätigung eines Sicherungselements nicht vornehmen können.

Gemäß einem weiteren Merkmal der Erfindung ist vorgesehen, dass der erste Verriegelungsschieber, der erste Schwenkarm oder das erste Sicherungselement mit einem Sensor, vorzugsweise einem Mikroschalter, zusammenwirken. Der Sensor gestattet es in vorteilhafter Weise, insbesondere die Stellung des Verriegelungsschiebers detektieren zu können, der mit dem ersten Schwenkarm und dem ersten Sicherungselement zusammenwirkt. Alternativ können auch der erste Schwenkarm oder das erste Sicherungselement sensorisch erfasst werden. Die sensorische Erfassung des ersten Verriegelungsschiebers gestattet es, einem Verwender eine entsprechende Anzeige zur Verfügung zu stellen und/oder ein Schalten des zweiten Verriegelungsschiebers erst dann zu ermöglichen, wenn die dafür erforderliche Stellung des ersten Verriegelungsschiebers sensorisch erfasst ist. Dies erbringt in vorteilhafter Weise eine zusätzliche Steigerung der Betriebssicherheit.

Gemäß einem weiteren Merkmal der Erfindung ist ein Temperatursensor vorgesehen, der vorzugsweise im Gehäuse verbaut und in nächster Nähe zum Schaltkontakt platziert ist. Im Fall einer festgestellten Temperatur, die oberhalb einer vorgebbaren Soll-Temperatur liegt, kann mittels des Temperatursensors eine automatische Trennung des Strompfads erfolgen oder es wird ein Alarmsignal ausgegeben, das einem Verwender die Notwendigkeit einer Strompfadtrennung signalisiert.

Weitere Merkmale und Vorteile der Erfindung ergeben sich aus der nachfolgenden Beschreibung anhand der Figuren. Dabei zeigen
- Fig. 1: in rein schematischer Darstellung die Anordnung einer erfindungsgemäßen Schalteinrichtung;
- Fig. 2: in schematischer Perspektivansicht eine erfindungsgemäße Schalteinrichtung;
- Fig. 3: in einer Draufsicht von oben die Schalteinrichtung nach Fig. 2;
- Fig. 4: in schematischer Perspektivansicht in einer ersten Stellung ein Bedienelement der erfindungsgemäßen Schalteinrichtung;
- Fig. 5: in schematischer Perspektivansicht das Bedienelement nach Fig. 4 in einer zweiten Stellung;
- Fig. 6: in einer schematischen Draufsicht von oben das Bedienelement der erfindungsgemäßen Schalteinrichtung gemäß einer ersten Stellung;
- Fig. 7: das Bedienelement nach Fig. 6 in einer zweiten Stellung und
- Fig. 8: in einem schematischen Ablaufdiagramm das erfindungsgemäße Verfahren.

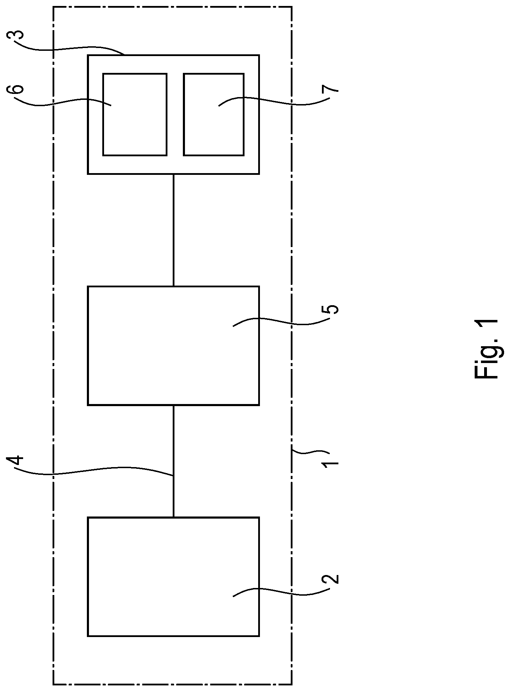

Fig. 1 lässt in schematischer Darstellung die Anordnung einer erfindungsgemäßen Schalteinrichtung 5 in einem Strompfad 4 eines Zuges 1 erkennen.

Wie sich aus der Darstellung nach Fig. 1 ergibt, verfügt ein nur schematisch dargestellter Zug 1 über ein Batteriemodul 2 einerseits sowie über ein Bordnetz 3 andererseits. Dabei umfasst das Bordnetz 3 in dargestelltem Ausführungsbeispiel ein Batteriemanagementsystem 6 und einen Verbraucher 7. Alternativ kann auch vorgesehen sein, das Batteriemanagementsystem 6 separat zum Bordnetz 3 auszubilden. Insbesondere kann vorgesehen sein, das Batteriemanagementsystem 6 vorzugsweise als integralen Bestandteil des Batteriemoduls 2 auszubilden oder das Batteriemodul 2 und das Batteriemanagementsystem 6 zu einer gemeinsamen Einheit zusammenzufassen. Bei dem Bordnetz 3 kann es sich insbesondere um ein Traktionsnetz handeln, das heißt ein Bordnetz eines Hochspannungssystems.

Das zugeigene Batteriemodul 2 steht über einen Strompfad 4 mit dem Bordnetz 3 des Zuges 1 in elektrischer Verbindung. In den Strompfad 4 ist eine Schalteinrichtung 5 gemäß der Erfindung integriert. Mittels der Schalteinrichtung 5 kann der Strompfad 4 unterbrochen werden, d.h. die elektrische Verbindung zwischen dem Batteriemodul 2 und dem Bordnetz 3 kann mittels der erfindungsgemäßen Schalteinrichtung 5 getrennt werden.

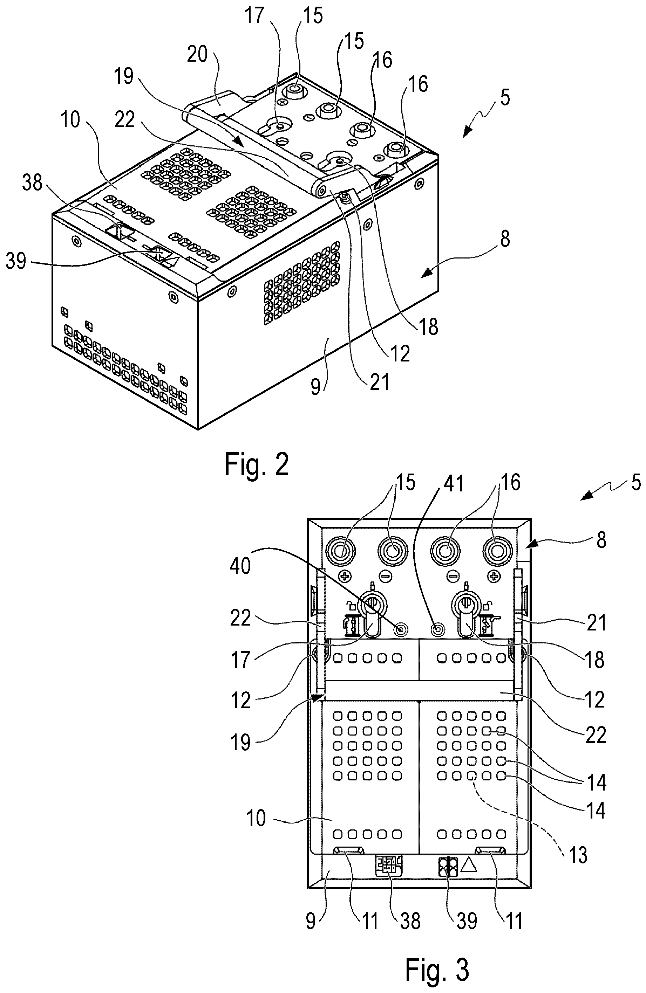

Die Ausgestaltung der erfindungsgemäßen Schalteinrichtung 5 ergibt sich aus einer Zusammenschau der weiteren Figuren 2 bis 7.

Wie zunächst die Figuren 2 und 3 erkennen lassen, verfügt die Schalteinrichtung 5 über ein Gehäuse 8. Dieses Gehäuse 8 weist einen Grundkörper 9 und eine Abdeckung 10 auf. Dabei ist die Abdeckung 10 lösbar am Grundkörper 9 angeordnet, zu welchem Zweck unter anderem als Befestigungsmittel dienende Schrauben 12 zum Einsatz kommen.

Vom Gehäuse 8 der Schalteinrichtung 5 sind ferner ein Stromeingang 15 und ein Stromausgang 16 bereitgestellt. Im bestimmungsgemäße Verwendungsfall ist das Batteriemodul 2 an den Stromeingang 15 und das Bordnetz 3 an den Stromausgang 16 angeschlossen.

Die Schalteinrichtung 5 weist ferner einen im endmontierten Zustand vom Gehäuse 8 aufgenommenen Sicherungshalter 13 auf, der eine den Stromausgang 16 absichernde Sicherung aufnimmt. Ein Zugriff auf die vom Sicherungshalter 13 beherbergten Sicherungen ist verwenderseitig möglich, nachdem die Abdeckung 10 vom Grundkörper 9 entfernt ist. Zu diesem Zweck sind zunächst die Schrauben 12 zu lösen. Alsdann kann die Abdeckung 10 in Relation zum Grundkörper 9 um eine durch die Fortsätze 11 der Abdeckung definierte Schwenkachse verschwenkt werden, so dass alsdann ein Lösen der Fortsätze 11 aus den zugehörigen Öffnungen des Grundkörpers 9 gestattet ist. Bei entfernter Abdeckung 10 kann ein Wechsel bzw. Austausch von Sicherungen stattfinden, die im dargestellten Ausführungsbeispiel insbesondere nach Fig. 3 lediglich schematisch durch die von der Abdeckung 10 bereitgestellten Durchbrüche 14 hindurch erkennbar sind.

Nach einem Sicherungstausch und/oder einer Wartung kann das Gehäuse 8 durch Wiederaufsetzen der Abdeckung 10 verschlossen werden, indem in umgekehrter Reihenfolge verfahren wird, d.h. zunächst die Fortsätze 11 der Abdeckung 10 in die zugehörigen Öffnungen des Grundkörpers eingeführt, die Abdeckung 10 alsdann in Richtung auf den Grundkörper 9 verschwenkt und zuletzt die Schrauben 12 eingesetzt und angezogen werden.

Die Schalteinrichtung 5 verfügt des Weiteren über Sicherungselemente, und zwar über ein erstes Sicherungselement 17 und ein zweites Sicherungselement 18. Im gezeigten Ausführungsbeispiel sind die Sicherungselemente 17 und 18 jeweils als Schließzylinder ausgebildet, womit die Sicherungselemente 17 und 18 schlüsselbetätigt sind.

Die Schalteinrichtung 5 stellt einen vom Gehäuse 8 beherbergten Schaltkontakt 23 bereit, wie dieser im Weiteren noch näher beschrieben werden wird. Eine Betätigung des Schaltkontakts 23 findet anwenderseitig mittels eines Bedienelements 19 statt, bei dem es sich im gezeigten Ausführungsbeispiel um einen Hebel handelt.

Die Draufsicht nach Fig. 3 lässt ferner zwei Messbuchsen 40 und 41 erkennen, die zwischen den beiden Sicherungselementen 17 und 18 angeordnet sind. Die Messbuchsen 40 und 41 dienen dem wahlweisen Anschluss eines Spannungsprüfers. Dabei kann ein Spannungsprüfer der Standardbauform zum Einsatz kommen. Im bestimmungsgemäßen Verwendungsfall dient ein an die Schalteinrichtung 5 angeschlossener Spanungsprüfer insbesondere dazu, die Spannungsfreiheit im Falle eines geöffneten Schaltkontakts 23 zu erfassen. Bei geschlossenem Schaltkontakt 23 kann durch den Spannungsprüfer die bestimmungsgemäß anliegende Spannung erfasst werden. Alternativ anstelle der beiden Messbuchsen 40 und 41 kann auch vorgesehen sein, in die Schalteinrichtung 5 einen Spannungsprüfer zu integrieren. In diesem Fall stellt das Gehäuse 8 eine entsprechende Spannungsanzeige bereit.

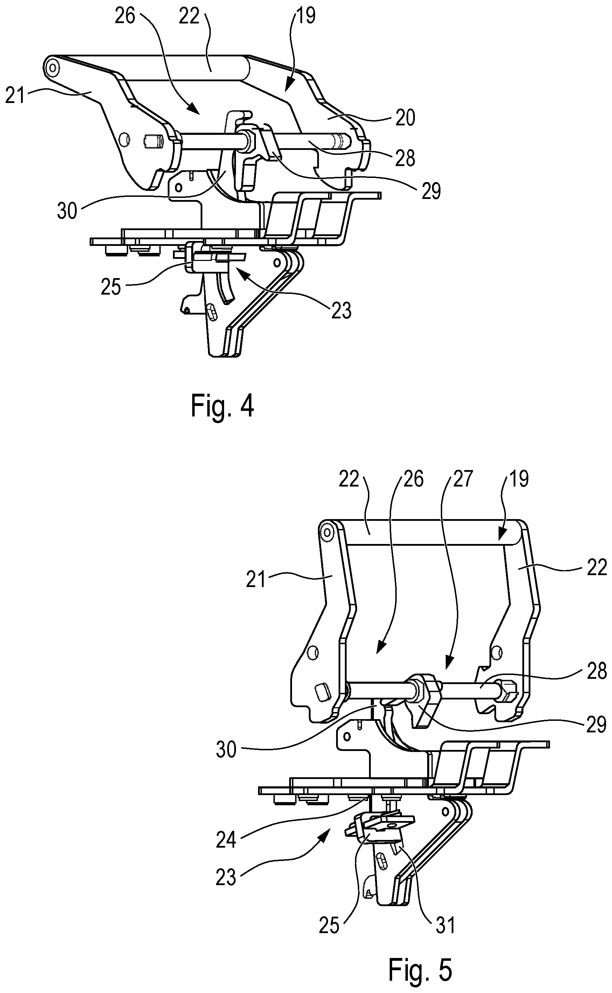

Wie sich insbesondere aus einer Zusammenschau der Figuren 4 und 5 ergibt, ist der Hebel 19 verschwenkbar am Grundkörper 9 des Gehäuses 8 angeordnet und verfügt über einen ersten Schwenkarm 20 und einen zweiten Schwenkarm 21. Zwischen den beiden Schwenkarmen 20 und 21 ist in Ausgestaltung einer Stange einer Hebelhandhabe 22 angeordnet. Diese Hebelhandhabe wird im bestimmungsgemäßen Verwendungsfall von einem Verwender ergriffen, was dann im Weiteren eine relative Verschwenkbewegung des Hebels 19 in Relation zum Gehäuse 8 ermöglicht.

Wie die Figuren 4 und 5 ferner erkennen lassen, verfügt der Hebel 19 des Weiteren über eine die beiden Schwenkarme 20 und 21 miteinander verbindende Stange 28, die der Hebelhandhabe 22 gegenüberliegend ausgebildet ist. Im bestimmungsgemäßen Verwendungsfall verschwenkt der Hebel 19 um eine von der Stange 28 definierte Drehachse.

Der Hebel 19 wirkt mit dem von der Schalteinrichtung 5 bereitgestellten Schaltkontakt 23 zusammen. Es ist zu diesem Zweck ein Getriebe 26 vorgesehen, wie sich dies insbesondere aus der Zusammenschau der Figuren 4 und 5 ergibt.

Das Getriebe 26 verfügt über ein hebelseitiges Kraftübertragungsmittel 27. Dieses ist von der Stange 28 und einem von der Stange 28 getragenen Nockenelement 29 bereitgestellt. Das Getriebe 26 weist ferner ein schaltkontaktseitiges Gegenstück 30 auf, das mit dem Nockenelement 29 zusammenwirkt. Im bestimmungsgemäßen Verwendungsfall führt eine Verschwenkbewegung des Hebels 19 aus der in Fig. 4 gezeigten Stellung in die in Fig. 5 gezeigte Stellung dazu, dass das Nockenelement 29 verdreht, und zwar um die von der Stange 28 bereitgestellte Drehachse, infolge dessen das mit dem Nockenelement 29 zusammenwirkende Gegenstück 30 innerhalb einer Kulisse 31 verfährt.

Der Schaltkontakt 23 verfügt über die beiden Schaltkontaktkomponenten 24 und 25. Dabei ist die Schaltkontaktkomponente 25 vom Gegenstück 30 getragen. Kommt es also im bestimmungsgemäßen Verwendungsfall zu einer Verschwenkbewegung des Hebels 19 in die in Fig. 5 gezeigte Stellung, so verfährt die Schaltkontaktkomponente 25 zusammen mit dem Gegenstück 30, infolge dessen die beiden Schaltkontaktkomponenten 24 und 25 voneinander getrennt werden. In der in Fig. 5 gezeigten Stellung ist der Schaltkontakt 23 mithin offen, wohingegen der Schaltkontakt 23 in der in Fig. 4 gezeigten Stellung geschlossen ist.

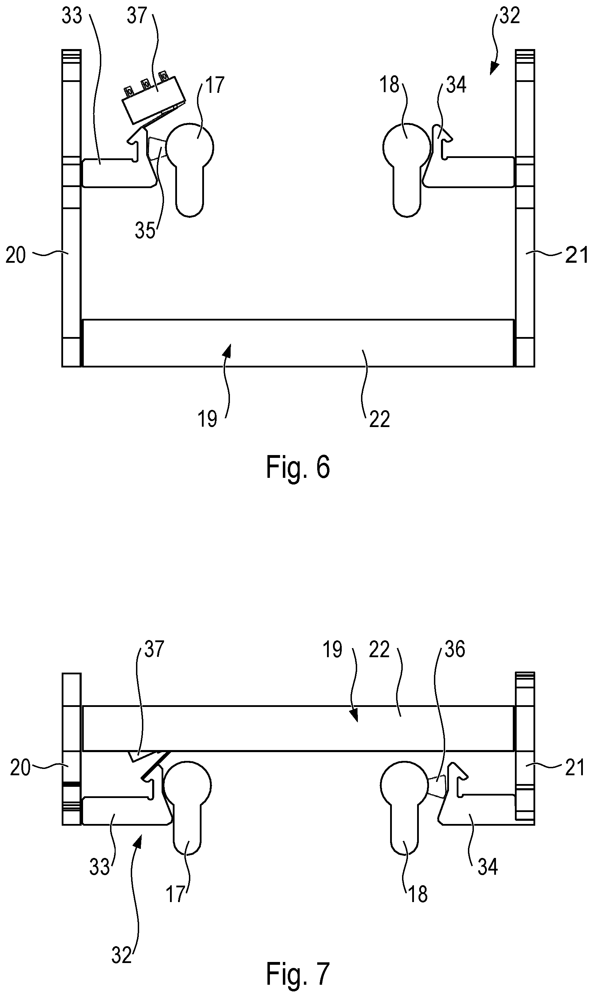

Eine Verdrehbewegung des Hebels 19 ist mittels des von der Schalteinrichtung 5 bereitgestellten Verriegelungselements 32 sperrbar. Wie sich in diesem Zusammenhang aus einer Zusammenschau der Figuren 6 und 7 ergibt, ist das Verriegelungselement 32 zweiteilig ausgebildet und verfügt über einen ersten Verriegelungsschieber 33 und einen zweiten Verriegelungsschieber 34. Beide Schieber 33 und 34 können jeweils in eine sperrende Stellung und in eine freigebende Stellung translatorisch verfahren werden. Dabei wirkt der erste Verriegelungsschieber 33 mit dem ersten Schwenkarm 20 des Hebels 19 zusammen und der zweite Verriegelungsschieber 34 wirkt mit dem zweiten Schwenkarm 21 des Hebels 19 zusammen.

Fig. 6 lässt den Hebel 19 bei geschlossenem Schaltkontakt 23 erkennen, also in einer Stellung, wie sich aus den Figuren 2, 3 und 4 ergibt. In dieser Stellung des Hebels 19 kann der erste Verriegelungsschieber 33 verfahren werden, und zwar aus einer den Hebel 19 sperrenden Stellung in eine den Hebel 19 freigebenden Stellung. Dabei zeigt Fig. 6 eine den Hebel 19 sperrende Stellung des Verriegelungsschiebers 33. Eine Verschiebebewegung des zweiten Verriegelungsschiebers 34 ist in dieser Stellung des Hebels 19 nicht möglich.

Fig. 7 zeigt den Hebel 19 bei geöffnetem Schaltkontakt 23, d.h. in einer Stellung, wie sie auch Fig. 5 entnommen werden kann. In dieser Stellung ist der Hebel 19 ausgehend von der Position nach Fig. 4 mit Bezug auf die Zeichnungsebene nach Fig. 4 nach rechts, d.h. mit Bezug auf die Zeichnungsebene nach Fig. 2 nach oben verschwenkt. In dieser Stellung des Hebels 19 kann der zweite Verriegelungsschieber 34 aus einer den Hebel 19 freigebenden Stellung in eine den Hebel 19 sperrenden Stellung verschoben werden und umgekehrt. Fig. 7 zeigt den zweiten Verriegelungsschieber 34 in einer Stellung, in der der Hebel 19 in seiner Verschwenkbewegung gesperrt ist. Der erste Verriegelungsschieber 33 ist in dieser Stellung des Hebels 19 nicht verschiebbar.

Im gezeigten Ausführungsbeispiel nach den Figuren 6 und 7 wirkt der erste Verriegelungsschieber 33 mit einem Sensor 37 in der Ausgestaltung eines Mikroschalters zusammen. In der den Hebel 19 sperrenden Stellung des ersten Verriegelungsschiebers 33 ist der Mikroschalter 37 geschlossen. Sobald der Verriegelungsschieber in die in Fig. 7 gezeigte Stellung überführt ist, öffnet der Mikroschalter 37 und gibt ein entsprechendes Signal ab.

Die Figuren 6 und 7 lassen ferner die als Schließzylinder jeweils ausgebildeten Sicherungselemente 17 und 18 erkennen. Dabei verfügt ein jedes Sicherungselement 17 bzw. 18 über ein Riegelelement 35 bzw. 36, das je nach Schlüsselstellung eines mit dem jeweiligen Sicherungselement zusammenwirkenden Schlüssels den zugehörigen Verriegelungsschieber 33 bzw. 34 in seiner Bewegung sperrt oder freigibt. So zeigt Fig. 6 eine Stellung des ersten Sicherungselements 17, demgemäß eine Verschiebung des ersten Verriegelungsschiebers 33 aus der in Fig. 6 gezeigten Stellung in die in Fig. 7 gezeigte Stellung dadurch unterbunden ist, dass das Riegelelement 35 den ersten Verriegelungsscheiber 33 blockiert.

Selbiges lassen die Figuren mit Bezug auf das zweite Sicherungselement 18 erkennen. So zeigt Fig. 7 eine Stellung des zweiten Verriegelungsschiebers 34, in der der Hebel 19 bei geöffnetem Schaltkontakt 23 in seiner Bewegung gesperrt ist. Auch das zweite Verriegelungselement 34 ist in seiner Bewegung gesperrt, da es durch das Riegelelement 36 des zweiten Sicherungselements 18 blockiert ist. Erst wenn das Sicherungselement 18 betätigt und das Riegelelement 36 außer Eingriff mit dem Verriegelungsschieber 34 gebracht ist, kann der Verriegelungsschieber 34 aus der in Fig. 7 gezeigten Stellung in die in Fig. 6 gezeigte Stellung überführt werden, in welcher dann auch der Hebel 19 freigegeben ist.

Die vorbeschriebene Schalteinrichtung 5 erlaubt eine Funktionsweise wie folgt.

Die Figuren 2 bis 4 und 6 lassen die Schalteinrichtung 5 in Normalstellung erkennen. In dieser Normalstellung ist der Hebel 19 geschlossen und verriegelt und der Schaltkontakt 23 geschlossen. Die Schalteinrichtung 5 kann mithin Strom vom Batteriemodul 2 zum Bordnetz 3 leiten.

Sollten nun Wartungsarbeiten, Reparaturarbeiten oder Sicherungswechsel an der Schalteinrichtung 5 vorgenommen werden, so ist der Stromfluss zum Bordnetz 3 zu trennen. Zu diesem Zweck bedarf es eines Schaltens des Schaltkontakts 23 durch eine Betätigung des Hebels 19.

Um den Hebel 19 betätigen zu können, ist der Verriegelungsschieber 33 in eine den Hebel 19 freigebende Stellung zu überführen. Zu diesem Zweck ist verwenderseitig in das Sicherungselement 17 der passende Schlüssel einzuführen und selbiger ist um 90° zu verdrehen, so dass das zugehörige Riegelelement 35 des ersten Sicherungselements 17 außer Eingriff mit dem ersten Verriegelungsschieber 33 kommt. Sobald dies geschehen ist, kann der Verriegelungsschieber 33 zur Freigabe des Hebels 19 verschoben werden. Zum selben Zeitpunkt öffnet der Mikroschalter 37 und sendet ein Signal an das Bordnetz 3, um zu signalisieren, dass der Hebel 19 entriegelt ist. Der Verwender kann nun den Hebel 19 öffnen und bis in die in den Figuren 5 und 7 gezeigte Endlage überführen. Infolge dessen wird der Schaltkontakt 23 geöffnet und damit der Strompfad 4 zwischen Batteriemodul 2 und Bordnetz 3 getrennt. Die mechanische Trennung der beiden Schaltkontaktkomponenten 24 und 25 des Schaltkontakts 23 kann sensorisch erfasst werden, so dass ein Signal an das Bordnetz 3 gesendet werden kann, um diesem zu signalisieren, dass der Schaltkontakt 23 geöffnet ist.

In einem weiteren Schritt wird verwenderseitig nun das zweite Sicherungselement 18 betätigt. Gemäß dem gezeigten Ausführungsbeispiel kommt hierzu ein Schließzylinder 18 zum Einsatz, der mit seinem Riegelelement 36 mit dem zweiten Verriegelungsschieber 34 zusammenwirkt. Dabei greift der zweite Verriegelungsschieber 34 in Sperrstellung in den Hebel 19 ein, so dass eine Verschwenkbewegung des Hebels 19 in dieser Stellung des Verriegelungsschiebers 34 nicht möglich ist. Ein Zurückverschwenken des Hebels 19 in die Ausgangsposition gemäß beispielsweise Fig. 2 ist damit sicher unterbunden. Aufgrund der Stellung des zweiten Sicherungselements 18 ist ein Verschieben des zweiten Verriegelungsschiebers 34 in der in Fig. 7 gezeigten Stellung nicht möglich, womit der Hebel 19 zuverlässig in seiner Stellung gesichert ist.

In der in Fig. 7 gezeigten Stellung des zweiten Sicherungselements 18 ist es bevorzugterweise nicht möglich, den im Schließzylinder 17 steckenden Schlüssel zu drehen oder zu entfernen, da dieser in dieser Stellung blockiert ist. Ebenfalls ist es nicht möglich, bei geschlossenem Hebel das zweite Sicherungselement 18 zu drehen und zu entfernen, da dieser in der Hebelstellung blockiert ist.

Wie sich ferner insbesondere aus einer Zusammenschau der Figuren 2 und 3 ergibt, sind die Schrauben 12 für die Abdeckung 10 bei sich in Normalstellung befindlichem Hebel 19 nicht zugänglich. Ein Entfernen der Abdeckung 10 zwecks Zugriffs auf den Sicherungshalter 13 ist also nur möglich, wenn der Hebel 19 in seine geöffnete Stellung gemäß Fig. 5 überführt ist, in welcher Stellung der Strompfad 4 getrennt ist.

Wie sich aus einer Zusammenschau der Figuren 2 und 3 ferner ergibt, kann die Schalteinrichtung 5 ferner über einen Anschluss 38 zum Anschluss einer Datenleitung verfügen. Ferner kann ein Anschluss 39 für den Anschluss eines Hilfsenergie-Pfads vorgesehen sein, beispielsweise ein Hilfspfad zur Versorgung eines von zwei Spannungsnetzen des Bordnetzes 3 mit Hilfsenergie. Die dafür vorgesehenen Ausgänge sind vorzugsweise zusätzlich durch vom Sicherungshalter 13 bereitgestellte Sicherungen abgesichert.

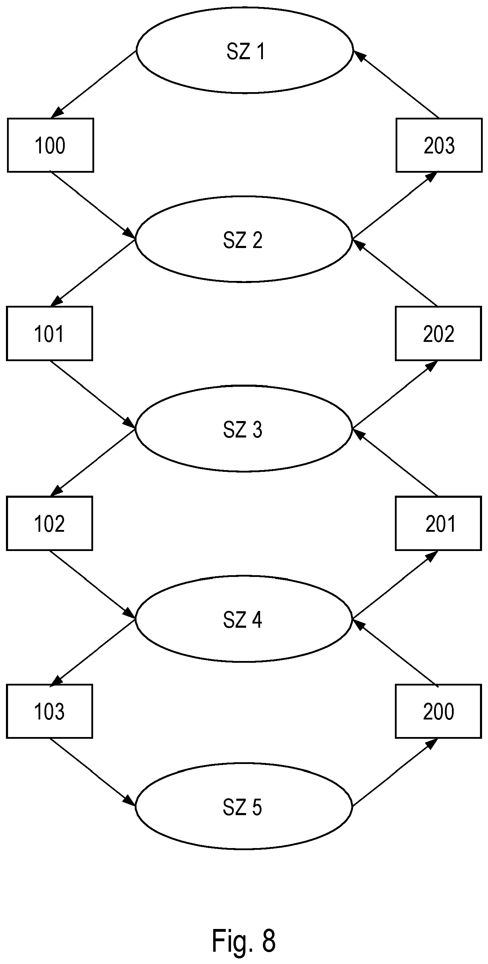

Fig. 8 lässt in rein schematischer Darstellung eine erfindungsgemäße Verfahrensabwicklung exemplarisch erkennen. Ausgangspunkt ist der Schaltzustand SZ 1.

Gemäß diesem Schaltzustand ist der Schaltkontakt 23 geschlossen und das Batteriemodul 2 steht über den Strompfad 4 in elektrischer Wirkverbindung mit dem Bordnetz 3. Zur Trennung des Strompfads 4 ist gemäß Verfahrensschritt 100 zunächst das erste Sicherungselement 17 zu bedienen, zu welchem Zweck der entsprechende Schlüssel in den Schließzylinder 17 eingeführt und gedreht wird. Der erste Verriegelungsschieber 33 ist nun freigegeben und verschoben, so dass mittels des Mikroschalters 37 eine entsprechende Signalvermittlung stattfindet. Es liegt deshalb der Schaltzustand SZ 2 vor.

Gemäß Verfahrensschritt 101 wird nun der Hebel 19 bedienerseitig verschwenkt. Es liegt alsdann der Schaltzustand SZ 3 vor, in welcher der Schaltkontakt 23 geöffnet ist. Eine Sicherung des Hebels 19 liegt in dieser Stellung noch nicht vor.

Eine Sicherung des Hebels 19 findet gemäß Verfahrensschritt 102 statt, indem das zweite Sicherungselement 18 betätigt wird. Im Ergebnis ergibt sich Schaltzustand SZ 4, in welcher der Schaltkontakt gesichert geöffnet ist. Dabei meint "gesichert", dass der Hebel 19 in schon vorbeschriebener Weise nicht ungewollte zurück verschwenken kann.

Gemäß Verfahrensschritt 103 können nun die bei verschwenktem Hebel 19 zugänglichen Schrauben 12 verwenderseitig erreicht und entfernt werden, so dass dann gemäß Schaltzustand SZ 5 nach Entfernung der Abdeckung 10 ein Sicherungstausch stattfinden kann.

Um ausgehend vom Schaltzustand SZ 5 zum Normalzustand gemäß Schaltzustand SZ 1 zurückzukommen, ist das vorbeschriebene Verfahren in umgekehrter Reihenfolge gemäß der Verfahrensschritte 200 bis 203 zu absolvieren.

### Bezugszeichen

- 1: Zug
- 2: Batteriemodul
- 3: Bordnetz
- 4: Strompfad
- 5: Schalteinrichtung
- 6: Batteriemanagementsystem
- 7: Verbraucher
- 8: Gehäuse
- 9: Grundkörper
- 10: Abdeckung
- 11: Fortsatz
- 12: Befestigungselement (Schraube)
- 13: Sicherungshalter
- 14: Durchbruch
- 15: Stromeingang
- 16: Stromausgang
- 17: erstes Sicherungselement (Schließzylinder)
- 18: zweites Sicherungselement (Schließzylinder)
- 19: Bedienelement (Hebel)
- 20: erster Schwenkarm
- 21: zweiter Schwenkwarm
- 22: Hebelhandhabe
- 23: Schaltkontakt
- 24: Schaltkontaktkomponente
- 25: Schaltkontaktkomponente
- 26: Getriebe
- 27: Kraftübertragungsmittel
- 28: Stange
- 29: Nockenelement
- 30: Gegenstück
- 31: Kulisse
- 32: Verriegelungselement
- 33: erster Verriegelungsschieber
- 34: zweiter Verriegelungsschieber
- 35: Riegelelement
- 36: Riegelelement
- 37: Sensor (Mikroschalter)
- 38: Anschluss
- 39: Anschluss
- 40: Messbuchse
- 41: Messbuchse
- 100 bis 103: Verfah2rensschritte
- 200 bis 203: Verfahrensschritte
- SZ 1 bis SZ 5: Schaltzustände 1 bis 5

## Patentansprüche

1. Schalteinrichtung für einen Zug zur Anordnung in einem Strompfad zwischen einem zugeigenen Batteriemodul und einem Bordnetz des Zuges, mit einem batteriemodulseitigen Stromeingang (15), einem bordnetzseitigen Stromausgang (16), einem Sicherungshalter (13), der eine den Stromausgang (16) absichernde Sicherung aufnimmt, und einem zwischen Stromeingang (15) und Stromausgang (16) angeordneten Schaltkontakt (23), sowie ferner mit einem zur Betätigung des Schaltkontakts (23) vorgesehenen Bedienelement (19), einem mit dem Bedienelement (19) zusammenwirkenden Verriegelungselement (32), einem zwei mögliche Endlagen einnehmenden ersten Sicherungselement (17) und einem zwei mögliche Endlagen einnehmenden zweiten Sicherungselement (18), wobei das erste Sicherungselement (17) dazu eingerichtet ist, bei geschlossenem Schaltkontakt (23) eine Überführung des Verriegelungselements (32) in eine das Bedienelement (19) freigebende Stellung zu sperren und wobei das zweite Sicherungselement (18) dazu eingerichtet ist, bei geöffnetem Schaltkontakt (23) eine Überführung des Verriegelungselements (32) in eine das Bedienelement (19) sperrende Stellung zu bewirken.

2. Schalteinrichtung nach Anspruch 1, **gekennzeichnet durch** ein Gehäuse (8), das einen Grundkörper (9) und eine daran mittels entsprechender Befestigungsmittel (12) lösbar angeordnete Abdeckung (10) aufweist.

3. Schalteinrichtung nach Anspruch 2, **dadurch gekennzeichnet, dass** die freie Zugänglichkeit der Befestigungsmittel (12) bei geschlossenem Schaltkontakt (23) durch das Bedienelemente (19) gesperrt ist.

4. Schalteinrichtung nach Anspruch 3, **dadurch gekennzeichnet, dass** die Befestigungselemente (12) bei geschlossenem Schaltkontakt (23) durch das Bedienelement (9) verdeckt sind.

5. Schalteinrichtung nach einem der vorhergehenden Ansprüche 2 bis 4, **dadurch gekennzeichnet, dass** der Sicherungshalter (13) von der Abdeckung (10) abgedeckt ist.

6. Schalteinrichtung nach einem der vorhergehenden Ansprüche 2 bis 5, **dadurch gekennzeichnet, dass** das Bedienelement (19) ein am Grundkörper (9) des Gehäuses (8) verschwenkbar angeordneter Hebel ist.

7. Schalteinrichtung nach Anspruch 6, **dadurch gekennzeichnet, dass** der Hebel (19) einen ersten Schwenkarm (20), einen zweiten Schwenkarm (21) und eine zwischen den beiden Schwenkarmen (20, 21) angeordnete Hebelhandhabe (22) aufweist.

8. Schalteinrichtung nach einem der vorhergehenden Ansprüche, **dadurch gekennzeichnet, dass** das Bedienelement (19) unter Zwischenordnung eines Getriebes (26) mit dem Schaltkontakt (23) zusammenwirkt.

9. Schalteinrichtung nach Anspruch 8, **dadurch gekennzeichnet, dass** das Getriebe (26) ein bedienelementseitiges Kraftübertragungsmittel (27) und ein damit zusammenwirkendes Gegenstück (30) aufweist, wobei das Gegenstück (30) beweglich vom Gehäuse (8) aufgenommen ist und eine Schaltkontaktkomponente (25) des Schaltkontakts (23) trägt.

10. Schalteinrichtung nach Anspruch 9, **dadurch gekennzeichnet, dass** das Gegenstück (30) von einer Kulisse (31) verfahrbar aufgenommen ist.

11. Schalteinrichtung nach einem der vorhergehenden Ansprüche, **dadurch gekennzeichnet, dass** das Verriegelungselement (32) zweiteilig ausgebildet ist und einen ersten verfahrbaren Verriegelungsschieber (33) sowie einen zweiten verfahrbaren Verriegelungsschieber (34) aufweist.

12. Schalteinrichtung nach Anspruch 11, **dadurch gekennzeichnet, dass** der erste Verriegelungsschieber (33) mit dem ersten Sicherungselement (17) und dem ersten Schwenkarm (20) zusammenwirkt und der zweite Verriegelungsschieber (33) mit dem zweiten Sicherungselement (18) und dem zweiten Schwenkarm (21) zusammenwirkt.

13. Schalteinrichtung nach einem der vorhergehenden Ansprüche, **dadurch gekennzeichnet, dass** die Sicherungselemente (17, 18) schlüsselbetätigbare Schließzylinder sind.

14. Schalteinrichtung nach Anspruch 11 oder 12, **dadurch gekennzeichnet, dass** der erste Verriegelungsschieber (32), der erste Schwenkarm (20) oder das erste Sicherungselement (17) mit einem Sensor, vorzugsweise einem Mikroschalter (37), zusammenwirken.

15. Verfahren zur elektrischen Trennung eines Strompfads (4) zwischen einem Batteriemodul (2) und einem Bordnetz (3) eines Zuges (1) mittels einer im Strompfad (4) angeordneten Schalteinrichtung (5),
- bei dem ein erstes Sicherungselement (17) betätigt und ein damit zusammenwirkendes Verriegelungselement (32) in eine Stellung überführt wird, in der ein mit einem Schaltkontakt (23) der Schalteinrichtung (5) in Wirkverbindung stehendes Bedienelement (19) freigegeben ist,
- bei dem das Bedienelement (19) betätigt und der Schaltkontakt (23) zur elektrischen Trennung des Strompfads (4) in eine geöffnete Stellung überführt wird und
- bei dem ein zweites Sicherungselement (18) und ein damit zusammenwirkendes Verriegelungselement (32) in eine Stellung überführt wird, in der bei geöffnetem Schaltkontakt (23) eine Rücküberführung des Bedienelements (19) gesperrt wird.
